# EUROPÄISCHE PATENTSCHRIFT

(11) **EP 1 784 298 B1**
(45) Veröffentlichungstag und Bekanntmachung des Hinweises auf die Patenterteilung: **22.04.2015**
(21) Anmeldenummer: 05789536.9
(22) Anmeldetag: 26.08.2005
(51) Int. Cl.: B29C 49/78, B29C 49/06, B29C 49/12, B29C 49/36, B29C 49/42

(54) **LUFTRECYCLING IM BLASFORMPROZESS**
RECYCLING OF AIR IN A BLOW-MOULDING PROCESS
RECYCLAGE D'AIR DANS LE PROCESSUS DE SOUFFLAGE

(30) Priorität: 31.08.2004 DE 102004041973
(43) Veröffentlichungstag der Anmeldung: 16.05.2007
(73) Patentinhaber: KRONES Aktiengesellschaft, 93073 Neutraubling (DE)
(72) Erfinder: ASBRAND, Helmut, 93104 Sünching (DE); FINGER, Dieter, 93073 Neutraubling (DE)
(74) Vertreter: Grünecker Patent- und Rechtsanwälte PartG mbB
(86) Internationale Anmeldenummer: PCT/EP2005/009222
(87) Internationale Veröffentlichungsnummer: WO 2006/024462

(56) Entgegenhaltungen:
- WO-A-03/009993
- DE-A1- 4 340 290
- DE-A1- 4 340 291
- DE-A1- 19 909 307
- US-A- 4 488 863

## Beschreibung

Die Erfindung betrifft ein Verfahren nach dem Oberbegriff des Anspruchs 1 und eine Vorrichtung nach dem Oberbegriff des Anspruchs 7.

Solche Verfahren und Vorrichtungen werden vor allem zur Formung von Behältern, wie Kanister oder Flaschen verwendet. Insbesondere finden Sie Anwendung in der Streckblastechnik, wo Flaschen u.a. für die Lebensmittelindustrie, insbesondere für die Getränkeindustrie hergestellt werden. Diese Verfahren und Vorrichtungen zeichnen sich durch sehr hohe Blasmedienverbräuche aus, da mit Drücken bis zu 40 Bar gearbeitet wird. Es wird deshalb immer wieder versucht, die Blasmedien durch verschiedene Verfahren und Vorrichtungen möglichst optimal zu nutzen, um den Verbrauch möglichst gering zu halten.

Im Stand der Technik sind deshalb schon einige solcher Verfahren und Vorrichtungen bekannt. So zeigt die US Patentschrift 4 488 863 eine Blasformvorrichtung bei der ein Gegenstand zuerst mit geringem Druck vor und dann mit einem höheren Druck fertig geblasen wird. Im Anschluss an das Fertigblasen wird ein Ventil geöffnet, so dass die unter dem höheren Druck stehende Fertigblasluft über eine Rückführleitung zur Vorblasluft rückgeführt wird. Die Zeitdauer der Öffnung dieses Ventils ist konstant. Der Speicher, in dem sich die Vorblasluft befindet, ist mit einem Druckregelventil versehen, so dass Vorblasluft bei zu hohem Anstieg des Druckes über das Druckregelventil und einen Schalldämpfer ins Freie gelangen kann. Ist dieser Rückführvorgang beendet, so wird der noch unter einem Restdruck stehende, fertig geblasene Behälter über ein anderes Ventil und einen Schalldämpfer gegen die Umgebung entlastet. Diese Vorrichtung hat den Nachteil, dass ein erhöhter baulicher Aufwand betrieben werden muss. Auch verlangsamen sich die Prozesszeiten, da das Ventil zur Rückführung der Vorblasluft immer eine konstante Zeit geöffnet wird. Befindet sich im Vorblasluftspeicher genügend Luft, so wird die rückgeführte Luft über den Vorblasluftspeicher ins Freie geleitet. Eine Teilentlastung des geblasenen Behälters geschieht quasi über den Vorblasluftspeicher. Außerdem ist mit dieser Vorrichtung nur eine ungenaue Regelung des Vorblasdruckes möglich.

Die deutsche Offenlegungsschrift DE 4 340 291 AI offenbart ein Verfahren und eine Vorrichtung nach dem Oberbegriff des Anspruchs I und des Anspruchs 7. Es wird ein Verfahren offenbart, bei dem ein Behälter aus thermoplastischem Kunststoff durch Zufuhr von Niederdruckvorblasluft und Hochdruckhauptblasluft ausgeformt wird. Dabei wird nach dem Vorblasen des Behälters während einer Übergangsphase Hochdruckblasluft der Niederdruckluftversorgung zugeführt. Dies geschieht über eine Umschaltung. Zur Eingrenzung von Druckschwankungen in der Niederdruckluftversorgung ist eine Drucküberwachung zur Begrenzung eines maximal bereitgestellten Niederluftdruckes vorhanden. Im Anschluss daran wird die sich noch im Behälter befindliche Restluft an die Umgebung abgegeben. Außerdem offenbart diese Offenlegungsschrift eine Vorrichtung, die nach diesem verfahren arbeitet.

Die deutsche Offenlegungsschrift DE 4 340 290 A1 offenbart ein Verfahren, bei dem aus einer Arbeitslufthauptversorgung während einer Rückgewinnungsphase eine Entlüftung in eine Arbeitsluftnebenversorgung auf geringerem Druckniveau durchgeführt wird.

Die Offenlegungsschrift WO 03/009993 A1 offenbart ein Rückgewinnungsverfahren für Niederdruckluft, bei dem Blasluft in einen separaten Rückgewinnungstank zurückgeführt wird. Dies erfolgt solange, bis im geblasenen Behälter ein voreingestellter Druck herrscht. Die Rückführungsdauer ist bei konstantem Fertigblasdruck ebenso konstant. Durch den zusätzlichen Rückgewinnungstank werden Druckschwankungen im Blasluftmedienspeicher reduziert.

Die genannten Vorrichtungen und Verfahren haben aber Nachteile. Die Blasluftrückführung führt zu einem Anstieg des Vorblasdrucks in der Versorgungsleitung. Diese rückgeführte Luft wird in benachbarten Blasstationen wieder verbraucht, weshalb sich ein Druckgleichgewicht einstellt. Das Druckgleichgewicht ist jedoch stark abhängig von der Rückgewinnungsdauer - also der Dauer der Übergangsphase -, die im Interesse der Kostenreduzierung möglichst hoch sein sollte, was allerdings zu einem hohen Vorblasdruck und in Folge zu einer verminderten Flaschenqualität führt. Um hier den optimalen Mittelweg zu finden, sind ein hohes Maß an Erfahrung und intensive Kenntnisse der Vorgänge in der Maschine erforderlich. Aus diesem Grund werden Luftrückgewinnungssysteme, die wie diese Vorrichtungen bzw. wie dieses Verfahren arbeiten, von dem Bedienpersonal der Maschine kaum akzeptiert.

Es ist deshalb neben der Optimierung des Luftverbrauchs auch Aufgabe der Erfindung, ein weitgehend automatisches Verfahren bereitzustellen, das einen stabilen Prozess mit gleichbleibender Flaschenqualität, bei gleichzeitig höchstmöglichem Rückgewinnungsfaktor garantiert. Außerdem ist es Aufgabe der Erfindung, eine Maschine bereitzustellen, deren Einsatz durch eine weitgehend automatische Regelung der Luftrückführung und damit eines optimalen Luftverbrauches erleichtert wird.

Erfindungsgemäß wird die Aufgabe des Verfahrens durch die Kennzeichen des Anspruchs 1 gelöst.

Bei den Behältern aus thermoplastischem Kunststoff kann es sich um jegliche hohle Gegenstände, die zur Aufbewahrung von insbesondere flüssigem Füllgut bestimmt sind, handeln. Dies können z.B. Flaschen, Kanister oder dgl. sein. Die Niederdruckluftversorgung, von der Niederdruckblasluft in den Vorformling geblasen wird, kann sowohl eine Leitung sein, die direkt mit einem Kompressor in Verbindung steht, sie kann aber auch ein Luftspeicher sein, der seinerseits wiederum von einem Kompressor mit Luft versorgt wird. Ist die Niederdruckluftversorgung als Speicher ausgebildet, so kann dies insbesondere bei Rundläufermaschinen ein Ringkanalspeicher sein.

Als Übergangsphase wird der Zeitraum bezeichnet, in dem Hochdruckblasluft vom fertig geblasenen Behälter in die Niederdruckluftversorgung strömt. Diese Überführung der Hochdruckblasluft in die Niederdruckluftversorgung erfolgt durch die Betätigung eines Umschalters, der insbesondere ein Ventil ist. Dieses Ventil hat mindestens zwei Schaltzustände. Bei dem einen fließt Niederdruckblasluft von der Niederdruckblasluftversorgung über eine Leitung in den auszuformenden Behälter. Bei dem anderen Schaltzustand wird vorzugsweise zumindest ein Teil der vorher beschriebenen Leitung benutzt, um die Hochdruckblasluft aus dem Behälter in die Niederdruckluftversorgung strömen zu lassen.

Im Bereich der Niederdruckluftversorgung ist eine Drucküberwachung vorgesehen, die aktuelle Werte des Ist-Druckes erfasst. Besonders vorteilhaft ist es, wenn die Drucküberwachung direkt in der Niederdruckluftversorgung stattfindet. Die Entlüftung des Behälters nach der Übergangsphase gegenüber einem Umgebungsdruck wird vorteilhafter Weise mit Hilfe eines Schalldämpfers vorgenommen. Eine Drucksteuerung in der Niederdruckluftversorgung wird durch eine Variation der Dauer der Übergangsphase vorgenommen. Dabei ist ein Wert für die Dauer der Übergangsphase beim Anlauf der Maschine festgelegt, während er im Laufe des Betriebes der Maschine durchaus von der Steuerung und Regelung verändert und an die Druckverhältnisse in der Niederdruckluftversorgung angepasst wird.

Die Drucksteuerung erfolgt dabei vorteilhafter Weise folgendermaßen: In der Niederdruckluftversorgung, wie z.B. einem Druckluftspeicher, befindet sich ein Druckaufnehmer, der einen Ist-Wert des Druckes erfasst. Dieser Ist-Wert wird an eine Steuerungs- und Regelungseinheit weitergegeben. Die Steuerungs- und Regelungseinheit kann sich entweder in der Nähe der Niederdruckluftversorgung befinden oder sie kann als Teil der zentralen Maschinensteuerung ausgebildet sein. Die Weitergabe des Ist-Wertes vom Druckaufnehmer an die Steuerungs- und Regelungseinheit kann sowohl drahtgebunden als auch drahtlos erfolgen. In der Maschinensteuerung wird dann der Ist-Wert des Druckes der Niederdruckluftversorgung mit dem vom Benutzer festgelegten Soll-Wert verglichen. Dieser vergleich, also die Information, ob in der Niederdruckluftversorgung zu wenig oder zu viel Druck vorhanden ist, wird von der Steuerungs- und Regelungseinheit dazu verwendet, um die Dauer der Übergangsphase zu ermitteln. Die gewonnene Größe für die Dauer der Übergangsphase wird von der Steuerungs- und Regelungseinheit in ein Signal umgewandelt, das an die Umschaltung weitergeleitet wird. Die Umschaltung ihrerseits öffnet je nach empfangenem Wert die Rückführung von der mit Fertigblasluft gefüllten Flasche zur Niederdruckluftversorgung. Ist der Ist-Wert des Druckes zu niedrig, wird die Übergangsphase verlängert, um einen höheren Rückfluss der Blasluft in die Niederdruckluftversorgung zu gewährleisten. Ist der Ist-Wert des Druckes höher als der Soll-Wert, so wird die Übergangsphase verkürzt. Beim Start der Maschine ist die Dauer der Übergangsphase fest, während sie im Laufe des Betriebes durch die Steuerungs- und Regelungseinheit adaptiv angepasst wird, um einen optimalen Betriebszustand mit möglichst hoher Blasluftrückführungsquote und möglichst genauem Einhalten des Soll-Wertes des Niederdruckes zu erhalten.

Erfindungsgemäß wird die Aufgabe der Vorrichtung gelöst durch die Merkmale des Anspruchs 7.

Bei der Vorrichtung zur Formung eines Behälters aus thermoplastischem Kunststoff handelt es sich insbesondere um eine Streckblasmaschine, vorzugsweise um eine Rotationsstreckblasmaschine. Beim Blasvorgang wird der Vorformling, der nach der Erwärmung in die Blasstation eingeführt wird, zusätzlich gereckt. Der Reckvorgang wird dabei von einem mechanisch betätigten (z.B. durch eine Steuerkurve) Reckdorn durchgeführt. Vorteilhafterweise wird der Reckdorn mit Druckluft betrieben und über die Niederdruckluftversorgung gespeist. Bevorzugterweise sind die Hochdruckblasluftversorgung und die Niederdruckluftversorgung, insbesondere bei der Rotationsstreckblasmaschine, als Ringkanalspeicher ausgebildet.

Die Umschaltung, die im Bereich eines Verbindungselements zwischen Blasstation und Blasluftversorgung angeordnet ist, kann als Steuerscheibe ausgebildet sein, die mit mehreren Luftnuten versehen und in Segmente mit unterschiedlichen Druckbeaufschlagungen unterteilt ist. Vorzugsweise handelt es sich bei der Umschaltung aber um ein Ventil, insbesondere um ein pneumatisches oder um ein elektromagnetisches Ventil. Die Umschaltung kann zwischen mindestens zwei Wegen schalten:
Während der Vorblasphase wird Niederdruckluft vom Niederdruckluftspeicher über die Umschaltung in den zu blasenden Behälter geleitet. Beginnt die Hauptblasphase, so wird Hochdruckblasluft in den fertig zu blasenden Behälter geleitet. Ist die Hauptblasphase beendet, schaltet die Umschaltung erneut um, um so die Verbindung von dem Niederdruckluftmedienspeicher zum ausgeformten Behälter wieder zu öffnen. Da nun der Druck im Behälter höher ist als der Druck im Vorblasmedienspeicher, strömt die Druckluft vom Behälter in den Speicher. Dies geschieht aber nur so lange, bis die Umschaltung geschlossen wird. Der Blasvorgang mit den Schritten des Vorblasens und des Fertigblasens ist somit beendet, wodurch die sich noch im Behälter befindliche Restluft über einen Schalldämpfer gegen die Umgebung entlastet werden kann.

Die Niederdruckluftversorgung bzw. der Niederdruckluftmedienspeicher enthält ein Element zur Erfassung des Druckes, das mit einer Steuer- und Regeleinheit verbunden ist und dieser Daten über den Ist-Zustand des Druckes liefert. Erkennt die Steuer- und Regeleinheit durch das von dem Element zur Erfassung des Druckes erhaltenen Signal, dass der Druck im Niederdruckluftmedienspeicher zu gering ist, so wird sie die Zeit, in der die Umschaltung so geschaltet ist, dass eine Verbindung vom Behälter zur Niederdruckluftversorgung besteht, verlängern. Ist der Druck zu hoch, so wird die Steuer- und Regeleinheit die Schaltzeit der Umschaltung verkürzen.

Eine bevorzugte Ausführungsform der Erfindung wird anhand der Fig. 1-3 näher erläutert.

Dabei zeigen:
- Fig. 1: eine schematische Darstellung der Luftverteilung in einer Streckblasmaschine,
- Fig. 2: eine schematische Darstellung der Luftverteilung in einer Streckblasmaschine ohne eine eigene Niederdruckluftversorgung und
- Fig. 3: eine Prinzipdarstellung des Druckverlaufes eines Blasvorganges mit Blasluftrückführung und eines Blasvorganges ohne Blasluftrückführung.

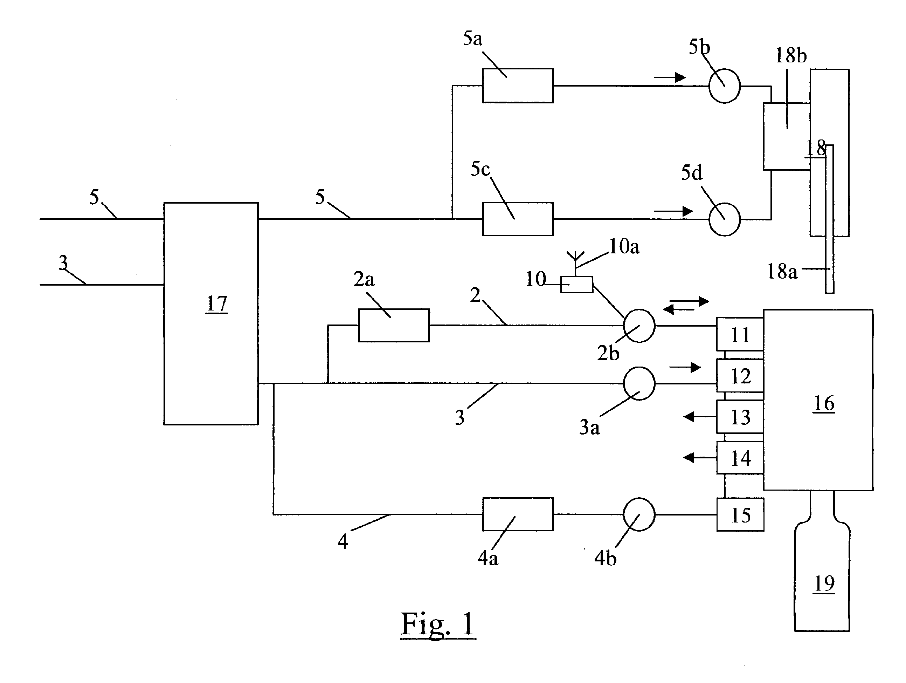

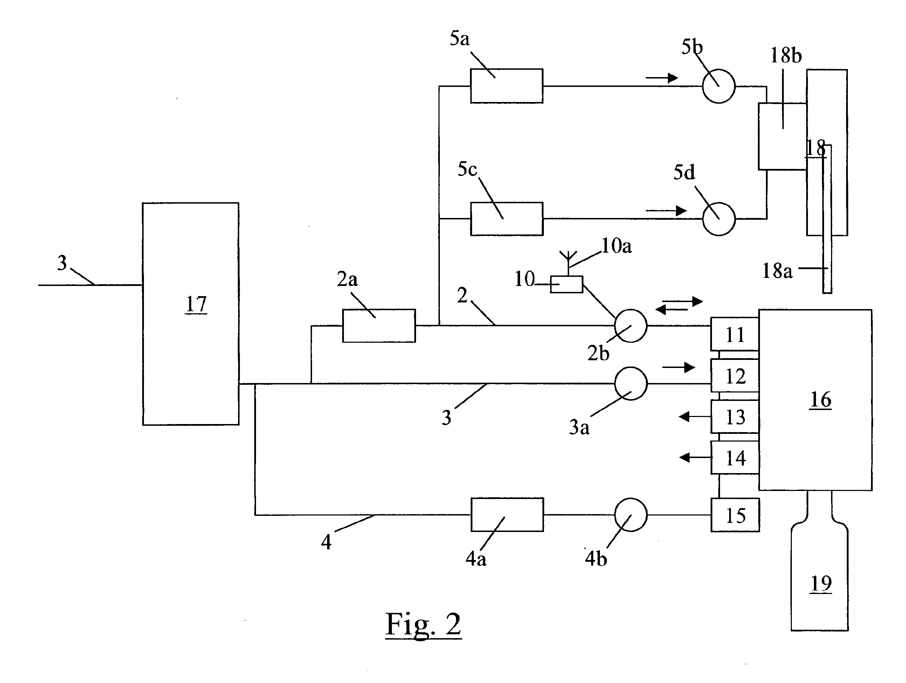

Figur 1 zeigt einen Luftverteiler 17 mit einem Eingang für eine Niedrigdruckluftversorgung 5 und einem Eingang für eine Hochdruckblasluftversorgung 3. In Richtung zur Maschine besitzt der Luftverteiler 17 zwei Ausgänge für die Niedrigdruckluft und die Hochdruckblasluft. Der Luftverteiler 17 hat die Aufgabe die Blasluft von einem stationären Teil in den drehenden Teil der Maschine zu bringen. Nach dem Luftverteiler 17 wird die Hochdruckblasluft auf drei Leitungen (2, 3, 4) aufgeteilt. Die Hochdruckblasluft, die mit z.B. 40 Bar vom Luftverteiler 17 in die drei Leitungen verteilt wird, strömt in Leitung 2 zuerst durch einen Druckregler 2a, der den Druck auf z.B. 16 Bar reduziert. Dort strömt die Luft weiter in einen Niederdruckmedienspeicher 2b, der hier als Ringleitung ausgebildet ist. Der Druck in diesem Speicher 2b wird durch einen Druckaufnehmer 10 überwacht. Vom Niederdruckmedienspeicher 2b strömt die Luft bei geöffnetem Vorblasventil 11 über die Blasdüse 16 in den auszuformenden Behälter 19, der dadurch vorgeblasen wird. Die Luft, die vom Luftverteiler 17 über die Hochdruckblasluftversorgung 3 in den Hochdruckmedienspeicher 3a strömt, steht unter einem Druck von z.B. 28 Bar und ist zum Fertigblasen des Behälters 19 gedacht. Sie strömt dazu, nachdem das Vorblasventil 11 geschlossen wurde, über das Fertigblasventil 12 und die Blasdüse 16 in den vorgeblasenen Behälter 19. Ist die Fertigblasphase beendet, so beginnt die Übergangsphase, in der das Vorblasventil 11 nochmals geöffnet wird, so dass die Fertigblasluft vom Behälter 19 über die Blasdüse 16 und das Vorblasventil 11 in den Niederdruckmedienspeicher 2b strömen kann. Die möglichen Fließrichtungen der Blasluft sind in Fig. 1 und 2 jeweils durch Pfeile gekennzeichnet, der Druck im Niederdruckmedienspeicher 2b wird dabei ständig vom Druckaufnehmer 10 überwacht, der die aktuellen Werte über eine Sendeeinheit 10a an die hier nicht gezeigte zentrale Maschinensteuerung weitergibt. Auf Grund der Druckverhältnisse im Niederdruckmedienspeicher 2b berechnet die zentrale Maschinensteuerung eine optimale Dauer für die Übergangsphase und gibt somit die Öffnungs- und Schließzeitpunkte des Vorblasventils 11 bei der Fertigblasluftrückführung vor.

Die Luft, die vom Luftverteiler 17 in die Steuerluftversorgung 4 strömt, wird durch einen Druckregler 4a auf z.B. 10 Bar reduziert, und in den Steuerluftmedienspeicher 4b geleitet. Die Steuerluft wird benötigt, um das Vorblasventil 11, das Fertigblasventil 12 und die beiden Entlüftungsventile 13 und 14 zu betätigen.

Ist die Übergangsphase mit der Fertigblasluftrückführung vom Behälter 19 in den Niederdruckmedienspeicher 2b beendet, so werden die beiden Entlüftungsventile 13 und 14 betätigt, um die restliche sich noch im Behälter 19 befindliche Luft gegen die Umgebung über einen hier nicht gezeigten Schalldämpfer zu entlasten.

Die Niedrigdruckluft wird nach dem Luftverteiler 17 in zwei Teilströme aufgeteilt. Diese Luft, die z.B. unter einem Druck von 10 Bar steht, wird von zwei Druckreglern (5a, 5c) auf einen Druck von z.B. 4 Bar reduziert. Die reduzierte Niedrigdruckluft strömt in ihre jeweiligen Niedrigdruckmedienspeicher 5b und 5d, die ebenfalls als Ringkanäle ausgebildet sind. Diese Niedrigdruckluft dient zur Steuerung des Reckdorns 18a in der Reckeinheit 18, wobei die Luft aus einem Speicher (5b) zur Abwärtsbewegung des Reckdorns und die Luft aus dem anderen Speicher (5d) zur Aufwärtsbewegung des Reckdorns, der während der Vorblasphase betätigt wird, dient.

Fig. 2 zeigt die gleiche Schemaskizze wie Fig. 1, mit dem Unterschied, dass keine eigene Niedrigdruckluftversorgung der Reckeinheit über den Luftverteiler 17 existiert. Die Versorgung der Reckeinheit 18 mit Druckluft wird vielmehr über die Niederdruckluftversorgung 2 vollzogen.

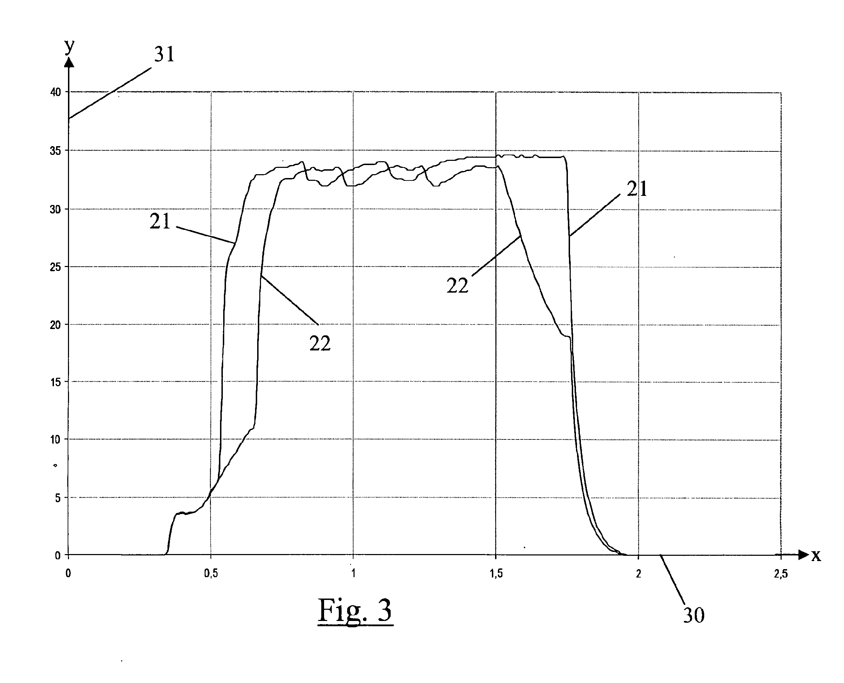

Fig. 3 zeigt zwei Kurven, wobei die Kurve 21 den Druckverlauf eines Blasvorgangs ohne Blasluftrückführung und die Kurve 22 den Druckverlauf eines Blasvorgangs mit Blasluftrückführung zeigt. Die X-Achse 30 des Diagramms gibt dabei die Zeit in Sekunden, die Y-Achse 31 den Druck in Bar an. Betrachtet man die Kurve nach dem herkömmlichen Prozess 21, so stellt man fest, dass die Fertigblasphase bei ca. 0,5 Sekunden beginnt und bei ca. 1,7 Sekunden durch das Öffnen der Entlüftungsventile 13 und 14 beendet wird.

Vergleicht man den Druckverlauf des Standardprozesses mit dem des Prozesses nach Kurve 22, so ist zu erkennen, daß der Beginn der Fertigblasphase später erfolgt, damit der Anteil der zurückgewonnenen Blasluft am gesamten Luftverbrauch möglichst hoch ist. Die Höhe der Lufteinsparung, die wesentlich durch den Fertigblasbeginn beeinflusst wird, hängt von vielen Faktoren wie z.B. von der Flaschenform und -größe ab. Je größer das zulässige Prozessfenster ist, desto mehr Druckluft kann eingespart werden.

Der Fertigblasdruck im Behälter 19 sinkt früher ab, da bei ca. 1,5 Sekunden das Vorblasventil 11 geöffnet wird, um die Übergangsphase und somit die Rückführung der Blasluft zu beginnen. Auch hier wird der Prozess bei ca. 1,7 Sekunden beendet, indem das Vorblasventil 11 geschlossen und die Entlüftungsventile 13 und 14 geöffnet werden.

## Patentansprüche

1. Verfahren zur Formung eines Behälters aus einem thermoplastischen Kunststoff, bei dem ein erwärmter Vorformling durch Zuführung von Niederdruckblasluft aus einer Niederdruckluftversorgung vorgeblasen und durch anschließende Zuführung von Hochdruckblasluft fertiggeblasen wird, wobei die aus dem fertig geblasenen Behälter strömende Hochdruckblasluft während einer Übergangsphase über eine Umschaltung der Niederdruckluftversorgung zugeführt und im Bereich der Niederdruckluftversorgung eine Drucküberwachung durchgeführt wird und nach der Übergangsphase eine Entlüftung des Behälters gegenüber einem Umgebungsdruck durchgeführt wird,
**dadurch gekennzeichnet, dass**
eine Drucksteuerung in der Niederdruckluftversorgung durch eine Variation der Dauer der Übergangsphase erfolgt; und
zur Drucksteuerung ein Istwert des Druckes in der Niederdruckluftversorgung erfasst wird.

2. Verfahren nach Anspruch 1,
**dadurch gekennzeichnet, dass**
der Istwert mit einem Sollwert des Druckes in der Niederdruckluftversorgung verglichen wird.

3. Verfahren nach Anspruch 1 oder 2,
**dadurch gekennzeichnet, dass**
durch den Vergleich des Ist- und des Sollwertes des Druckes in der Niederdruckluftversorgung die Dauer der Übergangsphase ermittelt wird, um ein Niederdruckgleichgewicht im Bereich des Sollwertes zu erzeugen.

4. Verfahren nach mindestens einem der vorangegangenen Ansprüche,
**dadurch gekennzeichnet, dass**
bei einem Start der Maschine die Dauer der Übergangsphase voreingestellt ist.

5. Verfahren nach mindestens einem der vorangegangenen Ansprüche,
**dadurch gekennzeichnet, dass**
sich die Dauer der Übergangsphase aufgrund der ständigen Vergleiche der Ist- und Sollwerte des Druckes der Niederdruckluftversorgung nach dem Start adaptiv anpasst.

6. Vorrichtung zur Formung eines Behälters (19) aus einem thermoplastischen Kunststoff, die mindestens eine zur Aufnahme eines erwärmten Vorformlings vorgesehene Blasstation auf weist und die zur Expansion des Vorformlings mit einer Hochdruckblasluftversorgung (3) versehen ist und bei der mindestens ein Bauelement im Bereich der Blasstation zur Betätigung mit einer Niederdruckluftversorgung (2) verbunden ist, in der Niederdruckluft bereitgestellt ist, die ein geringeres Druckniveau als im Bereich der Hochdruckblasluftversorgung bevorratete Hochdruckblasluft aufweist, wobei im Bereich eines Verbindungselements, das die Blasstation an die Blasluftversorgung anschließt, eine Umschaltung (11, 12) angeordnet ist, die während einer Hauptblasphase Hochdruckblasluft in den Bereich der Blasstation leitet und nach einer Beendigung der Hauptblasphase während einer Übergangsphase eine Verbindung zwischen der Blasstation und der Niederdruckluftversorgung (2) zur Blasluftüberleitung ausbildet, und dass die Blasstation an ein Freischaltelement (13, 14) angeschlossen ist, das nach einer Beendigung des Blasvorganges den Behälterinnenraum gegenüber einem Umgebungsdruck entlüftet, und dass die Niederdruckluftversorgung (2) ein Element zur Erfassung des Druckes (10) der Niederdruckluft auf weist,
**dadurch gekennzeichnet, dass**
das Element zur Erfassung des Druckes (10) mit einer Steuer- und Regeleinheit verbunden ist und dieser Daten über den Ist-Zustand des Druckes liefert; und
die Steuer- und Regeleinheit so eingerichtet ist, dass sie die Umschaltdauer in Abhängigkeit des vom Element zur Erfassung des Druckes (10) gelieferten Wertes steuert.

7. Vorrichtung nach Anspruch 6,
**dadurch gekennzeichnet, dass**
die Steuer- und Regeleinheit mit der Umschaltung (11, 12) verbunden ist und diese schaltet.

8. Vorrichtung nach Anspruch 6 oder 7,
**dadurch gekennzeichnet, dass**
es sich bei der Vorrichtung zur Formung eines Behälters (19) um eine Streckblasmaschine, insbesondere um eine Rotationsstreckblasmaschine handelt.

9. Vorrichtung nach mindestens einem der Ansprüche 6 bis 8,
**dadurch gekennzeichnet, dass**
es sich bei der Umschaltung (11, 12) um pneumatische Ventile handelt.

10. Vorrichtung nach mindestens einem der Ansprüche 6 bis 9,
**dadurch gekennzeichnet, dass**
es sich bei der Umschaltung (11, 12) um elektromagnetische Ventile handelt.

11. Vorrichtung nach mindestens einem der Ansprüche 6 bis 10,
**dadurch gekennzeichnet, dass**
die Niederdruckluftversorgung (2) zumindest teilweise ein Druckluftspeicher (2b) insbesondere in Form eines Ringkanals ist.

12. Vorrichtung nach mindestens einem der Ansprüche 6 bis 11,
**dadurch gekennzeichnet, dass**
die Steuer- und Regeleinheit von der zentralen Maschinensteuerung gebildet wird.

13. Vorrichtung nach mindestens einem der Ansprüche 6 bis 12,
**dadurch gekennzeichnet, dass**
das Element zur Erfassung des Druckes (10) über eine Leitung zur Datenübertragung mit der Steuer- und Regeleinheit verbunden ist.

14. Vorrichtung nach mindestens einem der Ansprüche 6 bis 13,
**dadurch gekennzeichnet, dass**
das Element zur Erfassung des Druckes (10) eine Sendeeinheit (10a) zur drahtlosen Datenübertragung an die Steuer-und Regeleinheit umfasst.

## Claims

1. Method of moulding a container from a heat-deformable plastic, whereby a heated preform is pre-blown by introducing low-pressure blowing air from a low-pressure air supply and then completing the blowing process by introducing high-pressure blowing air, and the high-pressure blowing air flowing out of the finished, blown container is fed via a switching means of the low-pressure air supply during a transition phase, and the pressure is monitored in the region of the low-pressure air supply, and after the transition phase the container is vented to ambient pressure,
**characterised in that**
the pressure in the low-pressure air supply is controlled by varying the duration of the transition phase; and an actual value of the pressure is detected in the low-pressure air supply in order to control the pressure.

2. Method as claimed in claim 1,
**characterised in that**
the actual value is compared with a desired value of the pressure in the low-pressure air supply.

3. Method as claimed in claim 1 or 2,
**characterised in that**
the duration of the transition phase is determined by comparing the actual value and desired value of the pressure in the low-pressure air supply in order to create a low-pressure equilibrium in the range of the desired value.

4. Method as claimed in at least one of the preceding claims,
**characterised in that**
the duration of the transition phase is pre-set on start-up of the machine.

5. Method as claimed in at least one of the preceding claims,
**characterised in that**
the duration of the transition phase is adaptively adjusted after the start-up on the basis of constant comparisons of the actual and desired values of the pressure in the low-pressure air supply.

6. Device for moulding a container (19) from a heat-deformable plastic, comprising at least one blowing station provided for receiving a heated preform and which is provided with a high-pressure blowing air supply (3) for expanding the preform and in which, for operating purposes, at least one component in the region of the blowing station is connected to a low-pressure air supply (2) from which low-pressure air is supplied at a lower pressure level than the high-pressure blowing air supplied in the region of the high-pressure blowing air supply, and a switching means (11, 12) is provided in the region of a connecting element connecting the blowing station to the blowing air supply, which directs high-pressure blowing air into the region of the blowing station during a main blowing phase and on termination of the main blowing phase establishes a connection between the blowing station and the low-pressure air supply (2) during a transition phase in order to transfer blowing air, and the blowing station is connected to an release-switch element (13, 14) which vents the container interior to ambient pressure on termination of the blowing operation, and the low-pressure air supply (2) has an element for detecting the pressure (10) of the low-pressure air,
**characterised in that**
the element for detecting the pressure (10) is connected to a control and regulating unit and the latter supplies data pertaining to the actual status of the pressure; and the control and regulating unit is configured to control the switching duration as a function of the value supplied by the element for detecting the pressure (10).

7. Device as claimed in claim 6,
**characterised in that**
the control and regulating unit is connected to the switching means(11, 12) and switches it.

8. Device as claimed in claim 6 or 7,
**characterised in that**
the device for moulding a container (19) is a stretch blow moulding machine, in particular a rotary stretch blow moulding machine.

9. Device as claimed in at least one of claims 6 to 8,
**characterised in that**
the switching means (11, 12) comprise pneumatic valves.

10. Device as claimed in at least one of claims 6 to 9,
**characterised in that**
the switching means (11, 12) comprise electromagnetic valves.

11. Device as claimed in at least one of claims 6 to 10,
**characterised in that**
the low-pressure air supply (2) at least partially comprises a compressed air storage (2b), in particular in the form of an annular passage.

12. Device as claimed in at least one of claims 6 to 11,
**characterised in that**
the control and regulating unit is formed by the central machine controller.

13. Device as claimed in at least one of claims 6 to 12,
**characterised in that**
the element for detecting the pressure (10) is connected to the control and regulating unit via a data transmission line.

14. Device as claimed in at least one of claims 6 to 13,
**characterised in that**
the element for detecting the pressure (10) comprises a transmitter unit (10a) for wirelessly transmitting data to the control and regulating unit.

## Revendications

1. Procédé pour le formage ou le moulage d'un récipient ou contenant en une matière plastique thermoplastique,
d'après lequel une préforme échauffée est pré-soufflée par amenée d'air de soufflage basse pression en provenance d'une alimentation en air comprimé basse pression, et le soufflage est achevé ensuite par l'amenée d'air de soufflage haute pression,
d'après lequel l'air de soufflage haute pression s'écoulant hors du contenant dont le soufflage est achevé, est amené à l'alimentation en air comprimé basse pression pendant une phase de transition, par l'intermédiaire d'une commutation d'inversion, et une surveillance de pression est effectuée dans la zone de l'alimentation en air comprimé basse pression, et, après la phase de transition, est effectuée une purge d'air du contenant par rapport à la pression ambiante de l'environnement,
**caractérisé en ce que**
l'on effectue une commande de la pression dans l'alimentation en air comprimé basse pression, par variation de la durée de la phase de transition ; et l'on relève, pour la commande de la pression, une valeur réelle de pression dans l'alimentation en air comprimé basse pression.

2. Procédé selon la revendication 1,
**caractérisé en ce que**
ladite valeur réelle est comparée à une valeur de consigne de la pression dans l'alimentation en air comprimé basse pression.

3. Procédé selon la revendication 1 ou la revendication 2,
**caractérisé en ce que**
par la comparaison de la valeur réelle et de la valeur de consigne de la pression dans l'alimentation en air comprimé basse pression, on détermine la durée de la phase de transition, en vue de produire un équilibre de la basse pression dans la zone de la valeur de consigne.

4. Procédé selon l'une au moins des revendications précédentes,
**caractérisé en ce que**
lors d'un démarrage de la machine, on prérègle la durée de la phase de transition.

5. Procédé selon l'une au moins des revendications précédentes,
**caractérisé en ce que**
la durée de la phase de transition s'ajuste de manière adaptative, après le démarrage, sur la base des comparaisons continuelles des valeurs réelles et des valeurs de consigne de la pression de l'alimentation en air comprimé basse pression.

6. Dispositif pour le formage ou le moulage d'un récipient ou contenant (19) en une matière plastique thermoplastique, qui comprend au moins un poste de soufflage destiné à recevoir une préforme ayant été échauffée, et qui est pourvu d'une alimentation en air de soufflage haute pression (3) pour assurer l'expansion de la préforme, dispositif
dans lequel au moins un composant dans la région du poste de soufflage est relié, pour l'actionnement, à une alimentation en air comprimé basse pression (2) dans laquelle est fourni de l'air comprimé basse pression, qui présente un niveau de pression moindre que l'air de soufflage haute pression fourni dans la zone de l'alimentation en air de soufflage haute pression,
dans lequel dans la zone d'un élément de liaison, qui raccorde le poste de soufflage à l'alimentation en air de soufflage, est agencée une commutation d'inversion (11, 12), qui, pendant une phase de soufflage principale, dirige de l'air de soufflage haute pression dans la zone du poste de soufflage, et, après achèvement de la phase de soufflage principale, établit, pendant une phase de transition, une liaison entre le poste de soufflage et l'alimentation en air comprimé basse pression (2) pour le transfert d'air de soufflage, et dans lequel le poste de soufflage est raccordé à un élément de déconnexion (13, 14), qui après un achèvement de l'opération de soufflage assure la purge d'air de l'espace intérieur du contenant par rapport à une pression ambiante de l'environnement, et
dans lequel l'alimentation en air comprimé basse pression (2) comporte un élément destiné à relever la pression (10) de l'air comprimé basse pression, **caractérisé en ce que**
l'élément destiné à relever la pression (10) est relié à une unité de commande et de régulation et fournit à celle-ci des données concernant l'état réel de la pression ; et
l'unité de commande et de régulation est configurée de manière à commander la durée d'inversion en fonction de la valeur fournie par l'élément destiné à relever la pression (10).

7. Dispositif selon la revendication 6,
**caractérisé en ce que**
l'unité de commande et de régulation est reliée à la commutation d'inversion (11, 12), et commande celle-ci.

8. Dispositif selon la revendication 6 ou la revendication 7,
**caractérisé en ce que**
concernant le dispositif pour le formage ou le moulage d'un contenant (19), il s'agit d'une machine d'étirage-soufflage, notamment d'une machine d'étirage-soufflage rotative.

9. Dispositif selon l'une au moins des revendications 6 à 8,
**caractérisé en ce que**
concernant la commutation d'inversion (11, 12), il s'agit de vannes pneumatiques.

10. Dispositif selon l'une au moins des revendications 6 à 9,
**caractérisé en ce que**
concernant la commutation d'inversion (11, 12), il s'agit de vannes électromagnétiques.

11. Dispositif selon l'une au moins des revendications 6 à 10,
**caractérisé en ce que**
l'alimentation en air comprimé basse pression (2) est au moins partiellement un accumulateur d'air comprimé (2b), notamment sous la forme d'un canal annulaire.

12. Dispositif selon l'une au moins des revendications 6 à 11,
**caractérisé en ce que**
l'unité de commande et de régulation est formée par la commande centrale de la machine.

13. Dispositif selon l'une au moins des revendications 6 à 12,
**caractérisé en ce que**
l'élément pour relever la pression (10) est relié à l'unité de commande et de régulation par l'intermédiaire d'une ligne pour la transmission de données.

14. Dispositif selon l'une au moins des revendications 6 à 13,
**caractérisé en ce que**
l'élément pour relever la pression (10) comprend une unité d'émission (10a) pour la transmission de données sans fil à l'unité de commande et de régulation.
